# EUROPEAN PATENT SPECIFICATION

(11) **EP 1 813 074 B1**
(45) Date of publication and mention of the grant of the patent: **08.02.2012**
(21) Application number: 04797936.4
(22) Date of filing: 16.11.2004
(51) Int. Cl.: H04L 29/06, H04L 29/12

(54) **METHOD, APPARATUS AND PROGRAM PRODUCTS FOR MANAGEMENT OF INFORMATION ABOUT SHARED FILES IN A MOBILE NETWORK**
VERFAHREN, VORRICHTUNG UND PROGRAMMPRODUKTE ZUR VERWALTUNG VON INFORMATIONEN ÜBER GEMEINSAM BENUTZTE DATEIEN IN EINEM MOBILNETZ
PROCEDE, APPAREIL ET PRODUITS DE PROGRAMMATION POUR GERER DES INFORMATIONS CONCERNANT DES FICHIERS PARTAGES DANS UN RESEAU MOBILE

(43) Date of publication of application: 01.08.2007
(73) Proprietor: NTT DOCOMO, INC., Chiyoda-ku Tokyo 100-6150 (JP)
(72) Inventor: KELLERER, Wolfgang, 82256 Fürstenfeldbruck (DE); TARLANO, Anthony, 80337 Munich (DE); ZÖLS, Stefan, 80801 Munich (DE); SCHOLLMEIER, Rüdiger, 82131 Gauting (DE)
(74) Representative: HOFFMANN EITLE
(86) International application number: PCT/EP2004/012997
(87) International publication number: WO 2006/053580

(56) References cited:
- WO-A-2004/027581
- US-A1- 2004 172 399
- BORG J: "A Comparative Study of Ad Hoc & Peer to Peer Networks" DISSERTATION SUBMITTED IN PARTIAL FULFILLMENT OF THE REQUIREMENTS FOR THE DEGREE OF MASTER OF SCIENCE IN TELECOMMUNICATIONS AT THE UNIVERSITY COLLEGE LONDON, August 2003 (2003-08), pages 1-170, XP002317988
- STOICA I ET AL: "CHORD: A SCALABLE PEER-TO-PEER LOOKUP PROTOCOL FOR INTERNET APPLICATIONS" IEEE / ACM TRANSACTIONS ON NETWORKING, IEEE INC. NEW YORK, US, vol. 11, no. 1, February 2003 (2003-02), pages 17-32, XP001144289 ISSN: 1063-6692 cited in the application

## Description

### FIELD OF THE INVENTION

The invention relates to information management in a network with dynamic behaviour.

### BACKGROUND OF THE INVENTION

Wireless communication networks are becoming increasingly popular and co-exist with or may even replace a traditional wire line communications network. Wireless networks enable users to wirelessly transmit information to other users, such as for a voice conversation between users of telephone terminals or a data communication between telephone terminals or any other kind of computing devices.

Wireless communication networks include mobile communication networks having a cellular structure with a plurality of nodes operative for transmitting data between other nodes or devices of the network. These networks may have a centralized access control, i.e., may have a centralized entity for managing communication resources and information in the network and. Alternatively, wireless communication networks may have a distributed medium access control, i.e., may have a distributed control facility for managing resources. Networks with distributed medium access control use a decentralized access to communication resources, essentially allowing the individual participants of the network to organize and negotiate access to resources among one another.

Further, many wireless communication networks are not static but have a dynamic behaviour, with individual nodes of the network joining and leaving the network in accordance for example with user demand. Ad-hoc communication networks are wireless communication networks with distributed medium access control and dynamic behaviour and composition, where an availability of resources and for example a coverage area depends on the participating network elements or nodes. An ad-hoc network or other wireless network may consist of a plurality of wireless devices using a wireless interface for exchanging data, such as packet data or continuous streams of data. Each wireless device may serve as a communication node, being responsible for forwarding data on behalf of other communication devices and may at the same time be running user applications on behalf of a user of the communication device, such as communication services.

Typical services provided in wireless networks include voice and data communications between participating devices and recently, a number of services emerged for sharing information between users of computing devices participating in the wireless network. In an information-sharing application participating users have access to data shared by users of other computing devices and are further able to share own data with other users.

Communication services for sharing data files between users of different computing devices generally provide a scheme for selecting and properly identifying a data file for retrieval, i.e., for retrieving a data file is selected from a list of offered files, and then a storage location of the data file is accessed for downloading the file.

Services for data file sharing are for example realized using peer-to-peer (P2P) networks that may be realized as dedicated networks or overlay networks on existing networks offering resources for file sharing and communication between the nodes and users. Accordingly, peer-to-peer networks can be implemented in existing network structures and provide for the above indicated service of identifying data files shared by users and identifying a storage location of the data files.

An approach for maintaining information on shared data files in a peer-to-peer network is to maintain a centralized log of all data files shared and their respective storage location. In this case, a user wishing to obtain information on shared files can access the centralized log and retrieve a desired data file by appropriately selecting the data file for download from the indicated storage location. However, such kind of organisation of information for accessing shared data files only works well in smaller and centralized networks where such centralized information is available and where enough storage for storing the information can be provided. Often such centralized control is undesirable or difficult to provide.

To avoid centralized information management information regarding shared files can be distributed over a larger number of network nodes of a peer-to-peer network. A straightforward approach for distributing information on shared files onto multiple network nodes is to sequentially number the shared files and to assign a certain range of the sequential numbers to one network node. While this approach works well in static environments with a certain given invariable number of shared files, such a numbering scheme will be cumbersome if larger numbers of files are added or removed from the list of shared files.

Distributed hash tables (DHT) can be used for more evenly distributing information regarding shared files onto multiple nodes. The basic concept of a distributed hash table is to distribute information regarding shared files onto a large number of network nodes by assigning to each network node a defined portion of the overall information on shared files. In this case it is important that each participating user of the peer-to-peer network is able to properly identify a network node holding information regarding a desired shared file and a structured way of distributing the information on shared files is required.

One possible realization of distributed hash tables with an information distribution more suitable to dynamic scenarios is the Chord protocol as described in I. Stoica, R. Morris, D. Karger, M. Kaashoek, and H. Balakrishnan, "Chord: A Scalable Peer-to-Peer Lookup Service for Internet Applications", presented at ACM SIG-COMM Conference, 2001. The Chord protocol is a scalable distributed lookup protocol that uses a hash function to achieve a suitable distribution of the information on shared files onto multiple network nodes. The basic concept of the Chord protocol is to assign an identifier of a sequence of identifiers to each participating network node and to each shard file using the hash function. Shared files associated with hash identifiers coming to lie close to the hash identifier of a network node are then assigned to this network node, i.e., this network node is responsible for managing these shared files.

One option of distributing the network nodes and data files onto the identifiers using the hash function is to hash the node identifier such as an IP address using the hash function, for obtaining a hash identifier associated with the node. Further, using the same scheme, a file identifier such as a file name associated with the file is hashed using the hash function to obtain an associated hash identifier of the data file. According to the Chord protocol, all data files associated with hash identifiers equal to or preceding a hash identifier assigned to a network node are then assigned to this network node. Accordingly, each network node will have responsibility for managing certain shared files as determined using the hash function.

If further files become available for sharing, it is then simply possible to determine an appropriate node by hashing the newly shared files to obtain hash identifiers assign the shared files to the appropriate network nodes.

If the network is enlarged, i.e. if a network node is added to the existing network, a portion of the network is rearranged, to account for the new network node. More precisely, if a new node joins the network, its node identifier is hashed using the hash function, and data files associated with hash identifiers equal to or preceding the hash identifier of the network node is assigned to the new network node. A similar procedure is performed in reverse direction, if a network leaves the network, in which case all information on shared files under the responsibility of the leaving node is redistributed onto the remaining nodes based on the above outlined hashing scheme of the Chord protocol.

While the Chord approach works well in mainly static environments with only few leaves or joins of network nodes in a given time period, frequent joins or leaves of network nodes may create an excessive transfer of information pertaining to shared data between the individual network nodes. Particularly in wireless networks with dynamic behaviour the rearranging of information on shared files may consume a large amount of the available overall bandwidth in the network.

Borg J: "A Comparative Study of Ad Hoc & Peer to Peer Networks", Dissertation submitted in partial fulfilment of the requirements for the Degree of Master of Science in Telecommunications at the University College London, August 2003 (2003-08), pages 1-170, XP002317988 proposes a modification to the Chord content discovery technique. The modification to the Chord content discovery technique includes defining a content broker wherein, as opposed to storing a range of content keys and corresponding content, each peer is responsible for locating content at another peer in the network, the corresponding content keys for which fall under a given peers responsibility. Each given peer is then said to be deterministically able to locate the corresponding content at other peers in a Chord ring. To locate content each content broker maintains a content table containing an entry for each content key that the broker is responsible for. Multiple copies of the same content for a given content key may be located. With multiple copies of the same content locatable, a content availability in the modified Chord scheme is believed to be increased.

### SUMMARY OF THE INVENTION

It is therefore an object of the invention to provide for improved information management in a peer-to-peer network with dynamic behaviour by reducing amounts of data transmitted between network nodes upon dynamic changes of the network.

According to an embodiment of the invention, a method for information management in a peer-to-peer network having temporary nodes and static nodes comprises receiving at a temporary node a lookup request for information on shared data related to a keyword, the keyword being associated with or mapped onto the temporary node based on a hash function and node identifiers of both the temporary nodes and the static nodes, obtaining a node identifier of a related static node by mapping the node identifier of the temporary node onto the static nodes based on the hash function and the node identifiers of the static nodes, and forwarding the request to the static node using the obtained identifier. As the request is forwarded to the related static node, the temporary node does not have to store information related to shared files and therefore, a temporary node entering of leaving the network only creates minimal overhead, avoiding the need to redistribute information on shared files stored in the network.

According to an example, keywords and node identifiers of the temporary nodes and the static nodes are mapped onto a ring of sequential hash identifiers by hashing the keywords and the node identifiers using that hash function, wherein each temporary or static node is responsible to handle lookup requests related to keywords signed to hash identifiers that precede or coincide with the hash identifier of the temporary or static node, and wherein each static node is responsible to hold information on shared data associated with keywords assigned to hash identifiers that precede or coincide with the hash identifier of the static node. Accordingly, information on shared files can advantageously be mapped or distributed onto the static nodes only, the temporary nodes not holding an information regarding shared files, but only being responsible for forwarding requests regarding identifiers to the related/succeeding static node.

According to another example, the temporary node, upon joining the peer-to-peer network, obtains the node identifier of the related static node by effecting hashing its own node identifier to determine the node identifier of the static node responsible for this hash identifier.

According to another example, determining the node identifier of the related static node includes hashing the node identifier of the temporary node to obtain a hash identifier associated with the temporary node, determining a node responsible for the hash identifier of the temporary node, and transmitting a request to the determined node, instructing the node to return its node identifier, if the node is a static node, or to return the node identifier of the static node related with the determined node, if the node is a temporary node. Accordingly, the related static node can advantageously be identified as the node responsible for holding information on shared data files associated with hash identifiers within the responsible range of hash identifiers of the temporary node.

According to another embodiment, the first one of the static nodes associated with a hash identifier succeeding the hash identifier associated with the temporary node constitutes the related static node.

According to another embodiment, the temporary node obtains a list of related static nodes associated with hash identifiers succeeding the hash identifier associated with the temporary node. Accordingly, if a static node for example leaves the network, the temporary node can readily select a new related static node as a target for forwarding requests pertaining to information on shared data.

According to another embodiment, the temporary node transmits a request to obtain the node identifier of the related static node to one of the nodes of the peer-to-peer network.

According to another embodiment, the temporary node received a storage request to store information on shared data associated with the keyword from a requesting node, and returns the identifier of the obtained static node to the requesting node for instructing the requesting node to forward information on shared data to the obtained static node. Accordingly, information on shared data is not stored at the temporary node, but suitably forwarded to the related static node for storage thereat.

According to another embodiment, for distributing information on a shared file of the temporary node, the temporary node hashes each of at least one keyword associated with the file to be shared by the temporary node to determine an associated hash identifier, determining a node responsible to handle lookup requests related to the hash identifiers, and transmitting a profile associated with the shared file to each of the identified nodes for storage thereat, if the identified nodes are static nodes, or for forwarding the profile to the respectively related static node, if the identified nodes are temporary nodes. Accordingly, the information on a file to be shared by the temporary node is only distributed to static nodes, to avoid storing information on shared data at temporary nodes.

According to another embodiment, a temporary node being about to leave the network is determined, and a deletion of information profiles associated with shared files owned by the temporary node from the static nodes is instructed.

According to another embodiment, the information on a shared file owned by the temporary node and stored at a static node selected based on the hash function includes a time stamp, enabling deletion of the information on the shared file by the static node after lapse of a predetermined time; and wherein the node sharing the file in time intervals instructs the static node to reset the time stamp to the current time to avoid deletion of the information on the shared file.

According to another embodiment, the information on shared data constitutes a context space including a plurality of information profiles associated with the keyword, each information profile being associated with a shared file.

According to another embodiment of the invention, the distributing of keywords and node identifiers is performed using the Chord protocol.

According to another embodiment of the invention, a program is adapted to make a data processing device execute the above operations. Further, a computer-readable medium may be provided in which a program is embodied, where the program is to make a data processing device execute the above operations. A computer program product comprising the computer-readable medium may be provided.

According to another embodiment of the invention, a temporary node for information management in a peer-to-peer network having temporary nodes and static nodes comprises means for receiving a lookup request for information on shared data related to a keyword, the keyword being associated with or mapped onto the temporary node based on the hash function and node identifiers of both the temporary nodes and the static nodes; means for obtaining a node identifier of a related static node by mapping the node identifier of the temporary node onto the static nodes based on the hash function and node identifiers of the static nodes; and means for forwarding the request to the related static node using the obtained identifier.

Further embodiments of the invention are disclosed in further claims.

### BRIEF DESCRIPTION OF THE DRAWINGS

- Fig. 1: shows operations of a method for information management in a network according to an embodiment of the invention;
- Fig. 2: illustrates a Chord ring of hash identifiers network nodes for illustrating the Chord protocol.
- Fig. 3: illustrates a Chord ring of hash identifiers and temporary and static nodes for illustrating an embodiment of the invention.
- Fig. 4: illustrates operations for information management in a network according to an embodiment of the invention, particularly outlining operations for distributing information on shared data to temporary nodes and static nodes;
- Fig. 5: illustrates elements of a temporary node for information management in a network according to an embodiment of the invention;
- Fig. 6: illustrates elements of information on a shared file according to an embodiment of the invention;
- Fig. 7: illustrates operations for information management in a network according to an embodiment of the invention, particularly outlining operations for determining a related static node;
- Fig. 8: illustrates operations for information management in a network according to an embodiment of the invention, particularly outlining operations for determining a related static node using another network node;
- Fig. 9: illustrates operations for information management according to another embodiment of the invention, particularly outlining operations at a temporary node for entering information on a file shared by another node into the network;
- Fig. 10: illustrates operations for information management according to an embodiment of the invention, particularly outlining operations for entering information on a file shared by a node into the network; and
- Fig. 11: illustrates operations for information management in a network according to another embodiment of the invention, particularly outlining operations for removing a node from the network.

### DETAILED DESCRIPTION OF THE PREFERRED EMBODIMENTS

The data files to be shared include anything of interest for a user, such as files containing musical, video or other kind of information.

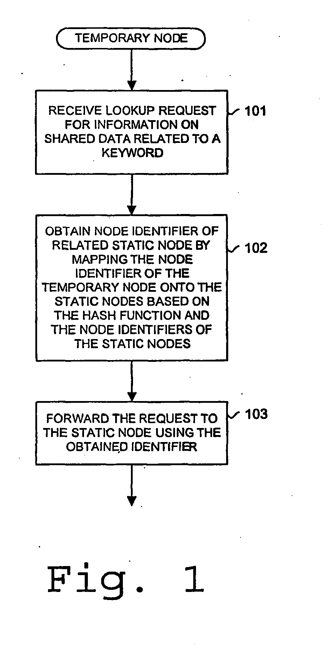

A first embodiment of the invention will now be described with regard to Fig. 1 illustrating operations of a method for information management in a peer-to-peer network having temporary nodes and static nodes.

The network nodes are linked with one another according to any arbitrary scheme or pattern, with individual nodes being able to communicate with one another. The network may be an overlay network onto an existing network or may be a network dedicated to information sharing. For example, the network is a peer-to-peer network with every node having equal responsibility, or any other network. In the following reference is made to a peer-to-peer network as an example. It is, however, noted that the invention is applicable to any other network.

In the embodiment of Fig. 1 it is assumed that some of the network nodes are static nodes, i.e., nodes which form part of the network for a comparatively long period of time, and further it is assumed that some of the network nodes are temporary nodes which join the network only for a comparatively short period of time, thereafter again leaving the network. Moreover, it is assumed in the embodiment of Fig. 1 that the peer-to-peer network is established for exchanging shared files between users of communication devices/network nodes of the peer-to-peer network. Each of the users may share own data files with other users and may have access to data files shared by other users. The data files to be shared include anything of interest for a user, such as files containing musical, video or other kind of information.

In an example, for accessing a shared data file a user employs information on the shared data file indicating at least a description of the data file and a storage location of the data file. E.g., a list of such descriptions and storage locations of many shared data files may be reviewed by the user and upon selecting a specific one of the shared data files, corresponding data content of the shared data file can be retrieved from the indicated storage location.

In this process it is assumed that the information on the shared files is mapped in the peer-to-peer network onto the participating static nodes of the network according to a scheme in a decentralized manner, in order to avoid bottlenecks or overload of individual network nodes.

According to an example, each shared file is associated with at least one keyword, such as a file name or string associated with the data file or its content, and each node of the network is identified by a node identifier, e.g. a network address. The keywords and the node identifiers of the temporary nodes and the static nodes of the network are mapped or distributed onto sequential hash identifiers by hashing the keywords and.the node identifiers using the hash function. Further, each node of the network is now responsible for data files associated with a certain range of hash identifiers of the sequential hash identifiers, to achieve a decentralized handling of requests regarding shared files. More precisely, each temporary or static node is responsible to handle lookup requests related to keywords assigned to a certain range of hash identifiers in a predefined relation to the hash identifier of the temporary or static node, and each static node is responsible to hold information on shared data associated with keywords assigned to hash identifiers in a predefined relation to the hash identifier of the static node. In other words, a temporary node is only responsible to handle its assigned portion of lookup requests, but does not store information on shared files, while a static node of the network is responsible to handle lookup requests and to also store a portion of the information on shared data. Consequently, the entire information on shared data is mapped onto the static nodes of the network.

In this environment, a temporary node performs the following operations of Fig. 1

In an operation 101 a user wishing to access a shared data file generates a corresponding look-up request for information on shared data e.g. using a keyword associated with the shared file and hashing the keyword using the hash function. If the keyword is mapped based on the hash function and node identifiers of both the temporary nodes and the static nodes on to a temporary node of the network, the request for information on the shared file will be directed to the responsible node, i.e. the user will transmit the look-up request for the information on the shared data to the node, as the node is determined responsible for handling the information on the shared data based on mapping the keyword onto the nodes based on the hash function and the node identifiers of both the temporary nodes and the static node.

If the receiving node is a temporary node, as considered the case in Fig. 1, in an operation 102, the temporary node obtains a node identifier of a related static node by mapping the node identifier of the temporary node onto the static nodes based on the hash function and the node identifiers of the static nodes.

And, as illustrated in operation 103, the request is transmitted to the identified related static node using the obtained identifier.

It is noted that in a given constellation of static nodes and temporary nodes a temporary node will always be associated with the same related static node, as the node identifier of the temporary node is mapped onto the static nodes based on the hash function and the node identifiers of the static nodes. Therefore, the node identifier, in a given constellation of static nodes and temporary nodes, needs to be obtained only once and may then be used for a period of time until the constellation of static nodes and temporary nodes changes, i.e., when the related static node leaves the network or if, e.g. a new static node joins the network. Further, in accordance therewith, the node identifier of the related static node may in an alternate embodiment be obtained in an initial phase upon the temporary node joining the network.

In accordance with the above described operations 101 to 103, a temporary node, even though it forms a part of the peer-to-peer network, is only responsible for forwarding a look-up request for information on shared data to the related static node, the related static node storing the information on the shared data. The temporary node therefore is not required to store information on shared data and frequent joins or leaves of temporary nodes do not create traffic in the peer-to-peer network associated with a re-distribution or re-mapping of information on shared data.

In other words, temporary nodes can be considered to constitute visiting nodes of the peer-to-peer network made up of the static nodes and the temporary nodes, with the static nodes storing all information on shared data and the temporary nodes solely performing a forwarding functionality of look-up requests pertaining to shared data, associated with hash identifiers assigned to the temporary node.

According to another example, the above forwarding scheme for look-up requests for information on shared data to a static node related to the temporary node can advantageously apply to an application where keywords and the node identifiers of the temporary nodes and the status nodes are mapped onto a ring of sequential hash identifiers by hashing both the keywords and the node identifiers of the temporary nodes and the static nodes using a hash function, wherein each temporary or static node is made responsible to handle look-up requests related to keywords assigned to hash identifiers that precede or coincide with the hash identifier of the temporary or static node, and wherein each static node is responsible to hold information on shared data associated with keywords assigned to hash identifiers that precede or coincide with the hash identifier of the static node.

Accordingly, according to this example all information on shared data is mapped onto the static nodes based on hashing the keywords associated with the data files and temporary nodes are only responsible for forwarding look-up requests related to keywords assigned to hash identifiers the temporary nodes are responsible for.

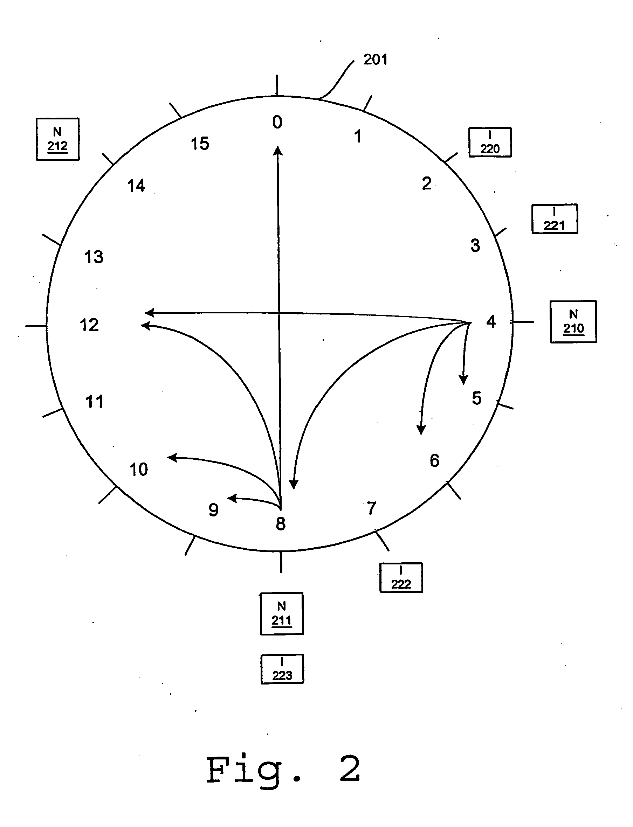

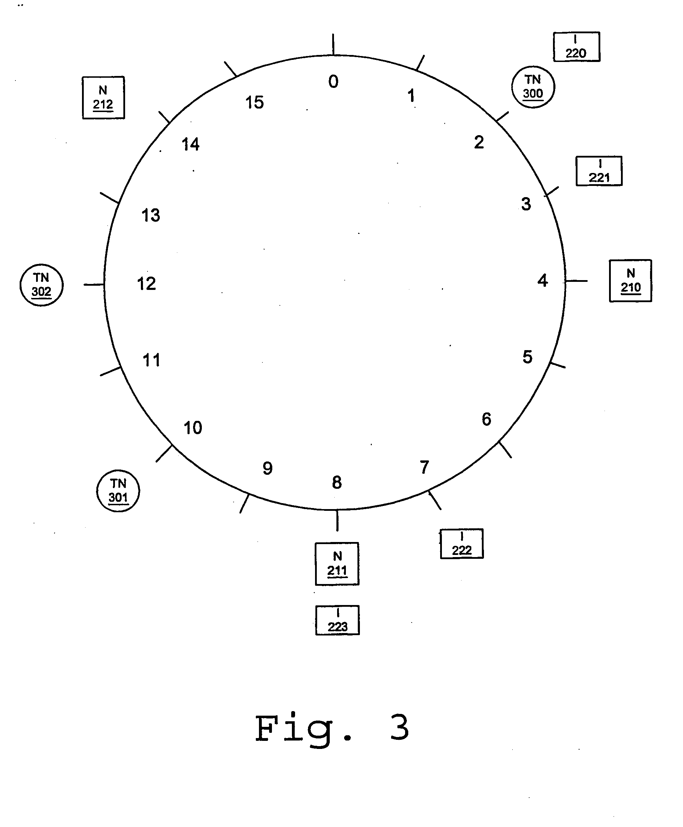

The inventive forwarding scheme can be particularly well applied for information management system in a peer-to-peer network using a hashing scheme or distributed hash tables. An example for applying the invention to the Chord protocol will now be outlined with regard to Figs. 2 and 3.

First, for a better understanding a conventional distribution of information on shared data according to the Chord protocol will be described with regard to Fig. 2.

Fig. 2 illustrates a ring of sequential hash identifiers 201, in the example considered to comprise sixteen hash identifiers 0-15. Moreover, Fig. 2 illustrates three network nodes 210, 211 and 213 as well as for information elements on shared data 220, 221, 222, 223, such as information profiles containing information on shared data. The network nodes 210, 211 and 212 may be interconnected with one another in an arbitrary way, e.g. in accordance with characteristics of the network, with the only requirement being that links can be established between the nodes of the networks. Further, as noted before, each information elements on shared data preferably at least includes a keyword associated with the shared file and a storage location of the shared file, enabling a retrieval of the contents of the shared file.

In Fig. 2, each keyword of the information sets 220 221, 222 and 223 and each node identifier of the network nodes 210, 211 and 212 is hashed using a hash function to respectively obtain one of the identifiers of the ring of sequential identifiers 201. The hashing can e.g. be performed by hashing the keyword itself or a string corresponding to the keyword using the hash function, and by hashing the node identifier such as an Internet address or any other identifier of the network node using the hash function. Furthermore, it is assumed that the hash function is selected such that the assignment of hash identifiers to shared data and network nodes is unique or that the risk of a double assignment is negligible.

In the example shown in Fig. 2 it is assumed that the information element or profile 220 is assigned using the hash function to the node identifier 2, that the information profile 221 is assigned to the hash identifier 3, that the information profile 222 is assigned to the hash identifier 7 and that the information profile 223 is assigned to the hash identifier 8. Furthermore, it is assumed that the network node 210 is assigned to the hash identifier 4, that the network node 211 is assigned to the hash identifier 8 and that the network node 212 is assigned to the hash identifier 14.

In this case, according to the conventional Chord protocol, each network node is made responsible for holding information profiles assigned to hash identifiers in a predetermined relation to the hash identifier of the network node, in this case preceding or equal to the hash identifier assigned to the respective network node. Accordingly, network node 210 is responsible for holding information sets 220 and 221, and network node 211 is responsible for holding information sets 222 and 223.

If now e.g. a user at network node 212 wishes to retrieve a shared data file described by the information set 220, the network node 212 will hash the keyword of the information set 220 using the hash function. If it is e.g. assumed that the information profile 220 pertains to the shared Beatles' song "Yellow Submarine", and contains the keyword Submarine, the hashing of the keyword Submarine leads to an identification of the hash identifier 2 of the ring of sequential identifiers 201.

Further, having identified the hash identifier 2 for the information profile 220 the network node 212 transmits a corresponding look-up request to the network node 210, being the network node responsible for the hash identifier 2 and thus responsible for the information profile 220. It is reminded that each network node according to the Chord protocol is responsible for hash identifiers coinciding or preceding the hash identifier associated with the network node, i.e., network node 210 is responsible for any information profiles associated with identifiers 15, 0, 1, 2, 3 and 4, network node 221 is responsible for any information profiles associated with hash identifiers 5, 6, 7 and 8, and network node 212 is responsible for any information profiles associated with hash identifiers 9, 10, 11, 12, 13 and 14.

Then, the network node 210, being responsible for the information profile 220 and storing the information profile 223 returns at least information on a physical storage location of the desired shared file to the network node 212, enabling the network node 122 retrieve the desired data file. It is noted that the storage location of the physical file may be arbitrary, e.g. any of the network nodes or any other storage medium accessible by the peer-to-peer network.

In the following the inventive forwarding scheme is described with regard to Fig. 3 as applied to a peer-to-peer network operating using the Chord protocol.

Fig. 3 again illustrates the ring of sequential hash identifiers 201 and information profiles 220, 221, 222 and 223 as described with regard to Fig. 2. Further, Fig. 3 illustrates network nodes 210, 211 and 212 as shown with regard to Fig 2, these network nodes now being considered to constitute static network nodes, i.e., network nodes which permanently or at least for a comparatively long period of time form part of the peer-to-peer network. Moreover, Fig. 3 illustrates temporary network nodes 300, 301 and 302, considered to constitute network nodes, which only temporarily form part of the peer-to-peer network.

In the embodiment of Fig. 3 it is assigned that each temporary or static node is responsible to handle look-up requests related to keywords assigned to hash identifiers that precede or coincide with the hash identifier of the respective temporary or static node. In the practical case of Fig. 3 this means that the temporary node 300, assigned to hash identifier 2, is responsible for handling look-up requests with regard to hash identifiers 15, 0, 1 and 2. The static node:210, assigned to hash identifier 4, is responsible for handling look-up requests related to keywords associated with hash identifiers 3 and 4, the static node 211, assigned to the hash identifier 8 is considered responsible to handle look-up requests pertaining to keywords associated with hash identifiers 5, 6, 7 and 8, etc. Accordingly, the temporary node 300 is responsible to handle look-up requests regarding information profile 220, the static node 210 is responsible to handle look-up requests pertaining to the information profile 221, and the static node 211 is responsible to handle look-up requests pertaining the information profiles 222 and 223. It is however noted that each other predetermined relationship for an assignment of hash identifiers can be used, e.g. that each temporary or static node is responsible to handle look-up requests related to keywords assigned to hash identifiers that succeed or coincide with the hash identifier of the respective temporary or static node.

Moreover, in the embodiment of Fig. 3, it is assumed that each static node is responsible to hold information on shared data associated with keywords assigned to hash identifiers that precede or coincide with the hash identifier of the respective static node. In other words, information profiles are physically located on static nodes, with the static node 210 being responsible to store information profiles associated with hash identifiers 15, 0, 1, 2, 3 and 4, the static node 211 being responsible to store information profiles associated with hash identifiers 5, 6, 7 and 8, and the static node 212 being responsible to store information profiles associated with hash identifiers 9, 10, 11, 12 13 and 14. In the example of Fig. 3 the static node 210 will therefore store information profiles 220 and 221, and the static node 211 will store the information profiles 222 and 223. It is however noted that each other predetermined relationship for an assignment of hash identifiers can be used, e.g. that each static node is responsible to handle look-up requests related to keywords assigned to hash identifiers that succeed or coincide with the hash identifier of the static node.

Accordingly, while the temporary nodes are responsible for handling look-up requests pertaining to hash identifiers preceding or coinciding with the hash identifier of the temporary node, the temporary nodes are not responsible to physically store information profiles. The temporary nodes only perform a forwarding functionality of look-up requests to a respectively succeeding static node, as the succeeding static node physically stores information profiles targeted by look-up requests, which are to be handled by the temporary node.

Therefore, if e.g. the temporary node 300 receives a look-up request pertaining to an information profile is related to a keyword assigned to a hash identifier coinciding or preceding the hash identifier of the temporary node, i.e. hash identifiers 15, 0, 1 and 2, the temporary node 300 will forward this look-up request to the succeeding static node, i.e., the static node 210 physically holding any information profiles assigned to hash identifiers 15, 0, 1 and 2 (in addition to information profiles associated with hash identifiers 3 and 4).

In accordance with the embodiment described with regard to Fig. 3, if a temporary network node leaves the peer-to-peer network, it will therefore not be required to redistribute any information profiles stored at the temporary node 300, as with the temporary nature of the node 300 all information profiles the temporary node 300 is responsible for is stored at the succeeding static node 210. Similarly, if a temporary node joins the peer-to-peer network, a redistribution of information profiles is not required, the information profiles remain physically stored at the static nodes of the network. Consequently, additional network traffic upon temporary nodes joining or leaving the network is reduced to a minimum, making the above described concept particularly suitable for dynamically changing network topologies.

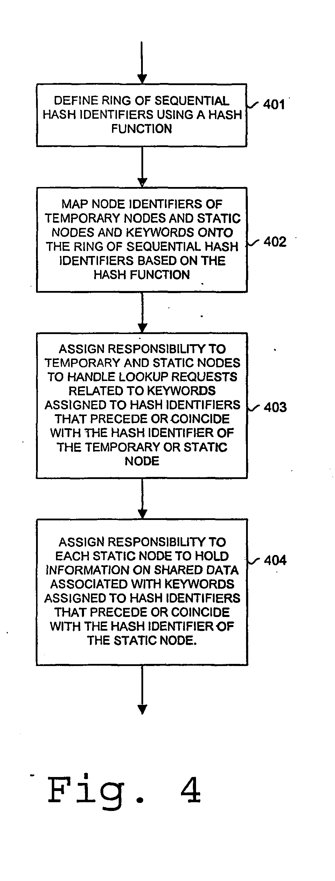

In the following a further embodiment of the invention will be described with regard to Fig. 4.

Fig. 4 illustrates operations of a method for information management in a peer-to-peer network, particularly illustrating assigned responsibilities to handle lookup requests and to store information profiles to temporary nodes and static nodes.

Fig. 4 illustrates an application of the inventive forwarding scheme of lookup requests to a static node to a peer-to-peer network employing distributed hash tables and hashing scheme.

In a first operation 401 a ring of sequential hash identifiers is defined using a hash function. In general, any hash function can be used such as hash functions known in the art, e.g. SHA-1, to determine a hash identifier for input values corresponding to keywords associated with shared data and identifiers of network nodes. Of course, it is preferred that the mapping of keywords and node identifiers is unique, i.e., the each hash identifier is associated with at most one keyword and associated with at most one node identifier.

Then, in an operation 402 the node identifiers of temporary nodes and the node identifiers of static nodes of the network are mapped onto the ring of hash identifiers using the hash function and further, also the keywords associated with the shared data are mapped onto the ring of sequential hash identifiers based on the hash function. The process of mapping a node identifier or keyword onto a hash identifier is achieved by processing the node identifier or keyword using the hash function, leading to an association between the node identifier and/or keyword, and the hash identifier.

While it is possible that operation 402 is performed for all keywords and node identifiers in a combined manner, it is also possible in distributed networks that there is no centralized mapping functionality, but that each network node maps the own node identifier and keywords onto the ring of hash identifiers and keeps track of only a certain sub-portion of associations between network nodes and hash identifiers, and/or keywords and hash identifiers. Accordingly, operation 402 need not be executed in the sequence shown in Fig. 4, but may be executed any time a node joins the network or upon presence of a lookup request pertaining to a keyword.

In an operation 403 responsibilities are assigned to the temporary and static nodes by using a predetermined relationship of hash identifiers, such as position with regard to one another. More precisely, the temporary nodes and static nodes are assigned with the responsibility to handle lookup requests related to keywords assigned to hash identifiers that precede or coincide with the hash identifier of the temporary node or static node. Accordingly, by this scheme each network node, i.e. temporary or static node, is responsible for a certain portion of the hash identifiers, namely the hash identifiers coinciding with or preceding the hash identifier of the network node down to the hash identifier of the preceding network node, and thus responsible to handle lookup requests pertaining to keywords assigned to these hash identifiers.

In a practical case, for example in a peer-to-peer network using the Chord protocol, the network nodes agree on being responsible for all hash identifiers of the ring of sequential hash identifiers down towards the next network node, as shown in explained for example with regard to Figs. 2 and 3.

In an operation 404 then responsibilities to store information profiles are assigned to the static nodes, to each static node it is assigned the responsibility to hold information on shared data associated with keywords assigned to hash identifiers that precede or coincide with the hash identifier of the static node. Accordingly, each static node is responsible to physically store information profiles associated with keywords that are assigned to hash identifiers preceding the node all the way down to the preceding static node. And accordingly, the information on shared data, i.e., the information profiles, is distributed only onto the static nodes.

In a practical case, for example in a peer-to-peer network using the Chord protocol, information on shared data entered into the peer-to-peer network is mapped onto the static nodes only by hashing the keyword and transferring the associated information profile to the responsible static node, disregarding any temporary nodes which may be associated with hash identifiers between the hash identifier of the keyword and the hash identifier of the succeeding static node.

While in Fig. 4 a certain sequence of operations is shown, it is noted that this sequence is not binding. Quite to the contrary, in a practical application, the individual operations to hash node identifiers and keywords, to distribute information profiles for storage, etc. are performed each time lookup requests are to be handled, and each time network nodes join the peer-to-peer network.

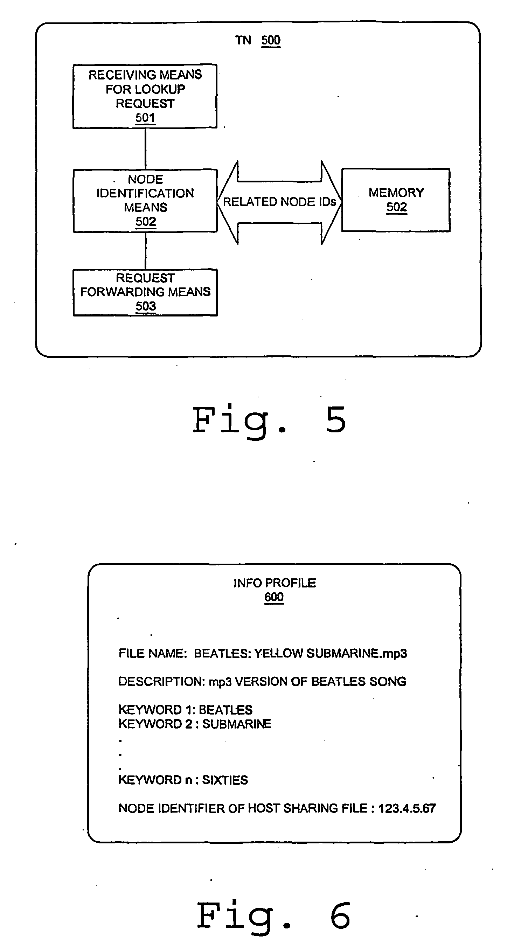

In the following a further embodiment of the invention will be described with regard to Fig. 5.

Fig. 5 illustrates elements of a temporary network node for information management of shared data files in a peer-to-peer network having temporary nodes and static nodes, as outlined with regard to previous embodiments.

Fig. 5 illustrates a temporary network node 500 forming part of the peer-to-peer network. The temporary network node 500 includes receiving means for receiving a lookup request for information on shared data related to a keyword, wherein the keyword is mapped onto or associated with the temporary node based on the hash function and the node identifiers of both the temporary nodes and the static nodes of the peer-to-peer network, as outlined for example with regard to previous embodiments.

Further, the temporary network node 500 includes node identification means 502 for obtaining a node identifier of a related static node by mapped the node identifier of the temporary node onto the static nodes based on the hash function and the node identifiers of the static nodes. The obtained node identifier of the related static node is then stored in a memory 502.

Still further, the temporary network node 500 includes request forwarding means for forwarding the lookup requests to the related static node using the obtained node identifier.

The temporary network node 500 and its components may be integrated into a computing device, such as a personal computer, laptop computer, personal digital assistant (PDA), mobile phone and similar. Preferably, the temporary network node is connected to the other network nodes of the peer-to-peer network using wire line or wireless connections. For example, the temporary network node 500 may be a computing device having a mobile connection to at least one further network node of the peer-to-peer network, temporary or static, thus gaining full access to the peer-to-peer network. While the network of computing devices may be solely established for the purpose of creating a peer-to-peer network for information management and sharing data files between users, the peer-to-peer network may also be introduced as an overlay network onto an existing wireless network, such as a GSM network, UMTS networks, wireless LAN network, internet and similar.

The elements of the temporary network node 500 may be realized by providing program section for execution on a processing unit of the temporary network node (not shown). For example, the functionalities of the receiving means, node identification means and request forwarding means may be realized by sequences of coded instructions stored in a memory such as the memory 502, which, when loaded into the processing unit of the temporary network node, make the temporary network node to realize the above outlined operations. Alternatively, the receiving means, node identification means and forwarding means may at least be partially realized as hardware units.

According to another example, the node identification means may be adapted to obtain, upon the temporary node joining the peer-to-peer network, obtaining the node identifier of the related static node by effecting hashing the node identifier of the temporary network node to determine the node identifier of the static node responsible for this hash identifier. For example, the node identification means may generate a corresponding request regarding identification of the related static node upon joining the network, and may transmit this request to at least one known network node of the peer-to-peer network.

In this regard, the node identification means may be adapted to determine the node identifier of the related static node by hashing the node identifier of the temporary node to obtain a hash identifier associated with the temporary node, by determining a node responsible for the hash identifier of the temporary node, and by transmitting a request to the determined node, instructing the node to return its node identifier, if the node is a static node, or to return the node identifier of the related static node of the determined node, if the node is a temporary node. Accordingly, the temporary network node does itself not have to be aware of all network nodes, most notably the related static node, but the related static node may be determined by an iterative process realized by plural network nodes of the peer-to-peer network, until the related static node is identified.

While the node identification means may be adapted to obtain only the node identifier of the related static node, such as the succeeding static node in the ring of sequential hash identifiers, the node identification means in another embodiment may be also adapted to obtain a plurality of node identifiers of a plurality of related static nodes, such as a plurality of succeeding static nodes.

The node identification means may transmit the request to obtain the node identifier of the related static node or the related static nodes to a arbitrary one of the network nodes of the peer-to-peer network, for example upon joining the peer-to-peer network.

In the following a further embodiment of the invention will be described with regard to Fig. 6.

Fig. 6 illustrates an example of information on shared data for use in the above information management scheme of the invention.

Fig. 6 illustrates an information profile 600 constituting the information on shared data, such as a shared file of a user.

It is preferred that the information profile at least contains a keyword associated with the shared file, and a node identifier of a host sharing the file. In addition thereto, the information profile may also include a full file name, any kind of description of the shared file and may contain further keywords associated with the file.

In the example shown in Fig. 6, the information profile is considered to be associated with the Beatles song "Yellow Submarine". The information profile in this example contains as a file name Beatles: Yellow Submarine.mp3, indicating that the file is an mp3 version of the Beatles song "Yellow Submarine". Further, the information profile 600 of the example of Fig. 6 includes a description of the shared file, indicating that the shared file is the mp3 version of the Beatles song "Yellow Submarine". Moreover, the information profile contains a number of keywords associated with the shared file, in the example the keywords being Beatles, Submarine and songs of the Sixties. Finally, the information profile 600 includes a node identifier of a host sharing the file, i.e., an identifier of a physical storage location of the file Yellow Submarine.mp3.

The keywords of the information profile may be in any suitable way related to the shared file, in order to facilitate an intuitive search for desired information. For example, in the present case Beatles and Submarine are suitable keywords, enabling a user searching for the song "Yellow Submarine" to conduct a search using the keywords Beatles and Submarine. Accordingly, keywords forming elements of a title of a shared file could be used, however, alternatively or in addition thereto also keywords describing the content may be used such as in the example of Fig. 6 the term "Sixties" or similar. The host sharing the file, i.e., the physical storage location of the file, in the present example the song Yellow Submarine.mp3, may be any location accessible by the network nodes of the peer-to-peer network, such as one of the network nodes itself, or any other storage device connectable to the network.

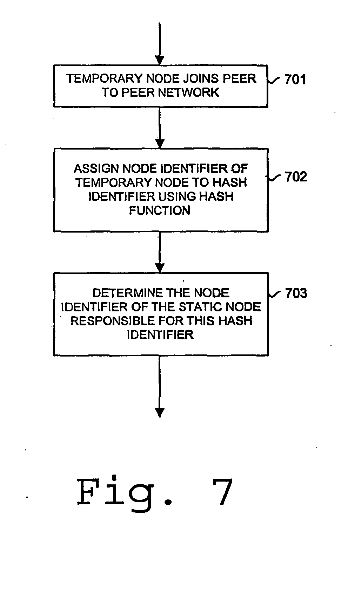

In the following, a further embodiment of the invention will be described with regard to Fig. 7.

Fig. 7 illustrates operations for information management in a peer-to-peer network, particularly outlining operations for determining the related static node, when a temporary node joins the peer-to-peer network.

In a first operation 701 a temporary node joins the peer-to-peer network, to access shared files of other users and to share own files with other users. A temporary node may for example join a peer-to-peer network by setting up a wire-bound or wireless connection to at least one node of the network. For example, a computing device constituting a temporary node may access a network by establishing a wire-bound or wireless connection to a communication network integrating or connecting to the network.

In an example, the peer-to-peer network may be established in the internet, and temporary nodes may join the peer-to-peer network by connecting to the internet through any kind of wireless or wire-bound connection, for example through a wireless communication network, such as a GSM net, UMTS net or wireless LAN network.

In an operation 702 the temporary node assigns a node identifier of the temporary node to a hash identifier using the hash function. For example, upon joining the peer-to-peer network, the temporary node may be provided with the required information on the type of hash function to be used.

Thereafter, in an operation 703 the temporary node determines the node identifier of the static node responsible for the hash identifier assigned to the temporary node. For example, as outlined with regard to a previous embodiment, the static node assigned to a hash identifier succeeding the hash identifier of the temporary node may be identified as responsible static node. Alternatively, any other scheme for assigning responsibilities may be used, for example, the static node assigned to a hash identifier preceding the hash identifier of the temporary node could also be identified as responsible static node.

While the responsible static node or related static node may be determined directly at the temporary node, it is also possible that the temporary node sends a corresponding request to identify the related static node to one or more of the network nodes of the peer-to-peer network, triggering an iterative search for the related static node in the peer-to-peer network. The latter procedure may be advantageous particularly in distributed dynamic networks, where each network node only maintains information on a portion of the overall peer-to-peer network.

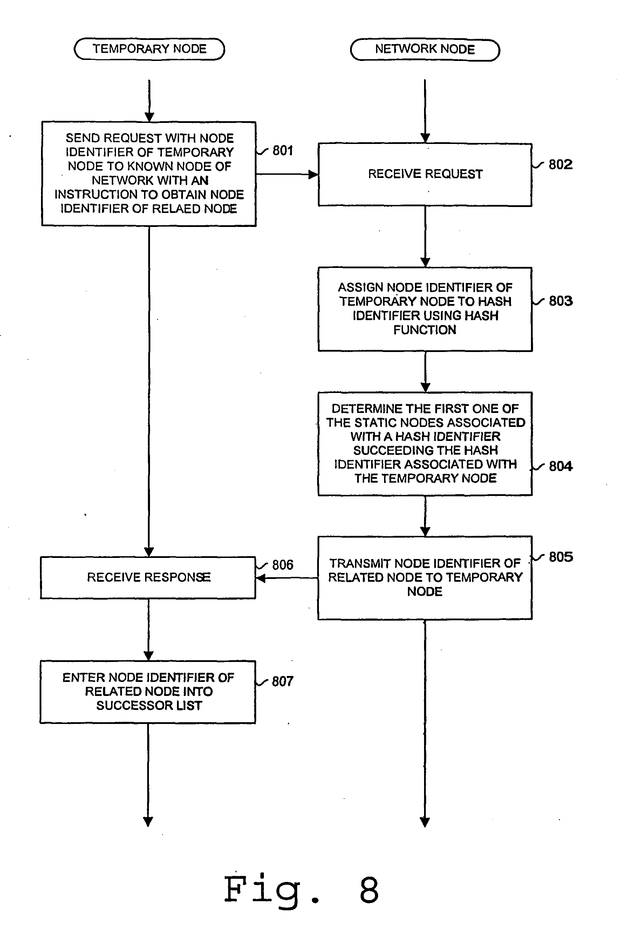

In the following a further embodiment of the invention will be described with regard to Fig. 8. Fig. 8 illustrates operations for information management in a peer-to-peer network having temporary nodes and static nodes, particularly illustrating operations for determining a node identifier of a node related to a temporary node of the network.

With regard to previous embodiments it was outlined that the temporary node is arranged to determine the network identifier of the related node, by mapping the node identifier of the temporary node onto the static nodes of the network based on the hash function and the node identifiers of the static nodes. Fig. 8 illustrates further details of the operations for determining the node identifier of the related node at the temporary node and an arbitrary other network node of the peer-to-peer network.

In a first operation 801, e.g. after the temporary node joins the peer-to-peer network, the temporary node sends a request with the node identifier of the temporary node to a known node of the peer-to-peer network including an instruction to obtain the node identifier of the static node related to the temporary node. The request preferably at least includes the node identifier of the temporary node, such as a network address of the temporary node. Further, the known node of the network may be any node of the network contacted by the temporary node, e.g. upon joining the network.

In an operation 802 the network node, i.e., the node known to the joining temporary node, receives the request, and in an operation 803 assigns the node identifier of the temporary node to a hash identifier of the ring of sequential hash identifiers using the hash function, as outlined with regard to previous embodiments. In an alternative, the temporary node may already hash its own identifier to obtain a hash identifier and may include the hash identifier into the request transmitted from the temporary node to the network node in operation 801.

In an operation 804, at the network node, the first one of the static nodes associated with a hash identifier succeeding the hash identifier associated with the temporary node is determined.

While operation 804 may be carried out at the known network node, operation 804 may also include forwarding the request to further network nodes in accordance with the used protocol, in order to eventually determine the related static node.

In a peer-to-peer network employing the Chord protocol, the related static node may be identified by the known network node in operation 804 using a finger list pointing to network nodes associated with hash identifiers of the ring of hash identifiers. In accordance with the Chord protocol, each network node maintains or builds a finger list of pointers to succeeding network nodes based on hash identifiers having a distance 2ⁿ to the hash identifier of the respective node in ascending direction. The exponent n is selected such that the "longest" finger points "across" the ring of hash identifiers, i.e., reaches halfway around the ring of hash identifiers as schematically illustrated in Fig. 2. Using the finger scheme, each network node may select a network node closer to a hash identifier in question, until in the iterative process a finger of a network node identifies a node responsible for the hash identifier in question.

In the search operation of 804 only static network nodes are considered, in order to determine the succeeding or related static node.

In an operation 805 the obtained node identifier is then transmitted back to the temporary node, e.g. through the known network node or any other node of the network.

In an operation 806 the response is received and the node identifier of the related node is included into a successor list of static network nodes in an operation 807.

In one example the successor list includes a single entry (namely the node identifier of the related static node, however, in other embodiments it is also possible that the successor list includes a number of related nodes, e.g. succeeding the temporary node in ascending direction along the ring of sequential hash identifiers. Additional related nodes for entry into the successor list may be determined using the above outlined scheme, by searching a related node of a hash identifier of a previously obtained related static node.

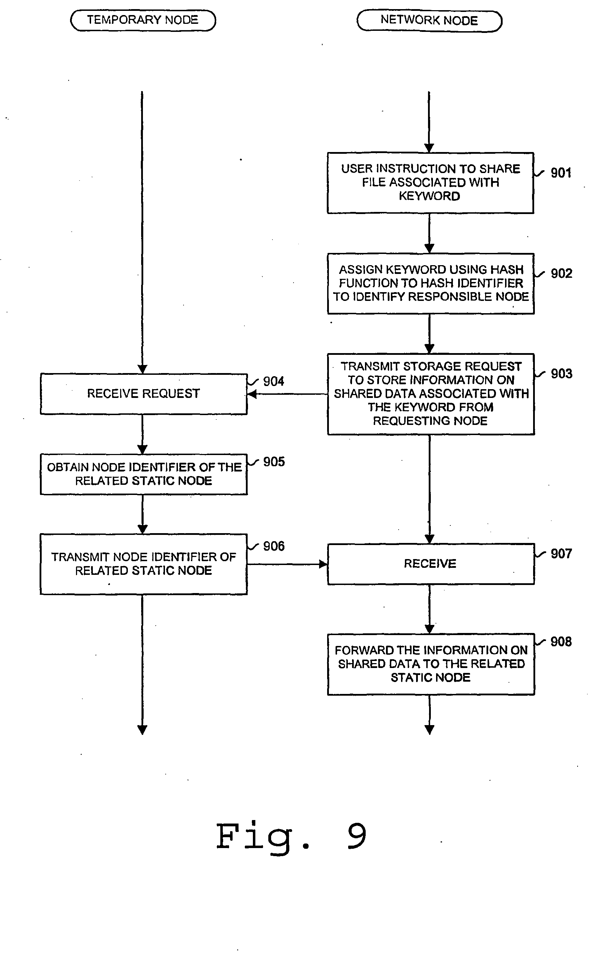

In the following a further embodiment of the invention will be outlined with regard to Fig. 9.

Fig. 9 illustrates operations of a method for managing information in a peer-to-peer network having temporary nodes and static nodes, particularly outlining operations for using the inventive forwarding scheme for entering shared files in the network. In Fig. 9 it is assumed that an arbitrary network node wishes to share a file associated with a keyword. Further, in Fig. 9 it is assumed that the keyword is mapped onto a hash identifier using the hash function, the hash identifier being in the responsibility range of a temporary node.

In a first operation 901 at the arbitrary network a user instruction to share a file associated with a keyword is detected. For example, as outlined with regard to Fig. 6, the shared file may be the mp3 version of the Beatles song "Yellow Submarine", associated with the keyword Submarine (besides possible further keywords such as Yellow and Sixties).

In an operation 902 the keyword is assigned to a hash identifier using the hash function to identify the responsible network node. As noted before, it is assumed that the temporary node is responsible for the hash identifier associated with the keyword obtained in operation 902.

In an operation 903 the network node then transmits a storage request to store information on the shared data, such as an information profile, associated with the keyword to the temporary node. The storage request at least includes the keyword and a storage location of the shared file, e.g. an Internet address.

In an operation 904 the request is received at the temporary node.

As noted with regard to previous embodiments, the temporary node, while being responsible to handle a lookup request pertaining to keywords associated with hash identifiers in the responsibility range of hash identifiers of the temporary node, the temporary node is not responsible for physically storing information on shared data. The information on shared data is stored on the related static node.

Therefore, in an operation 905 the temporary node obtains the node identifier of the related static node and transmits the identifier of the related static node, e.g. as outlined with regard to previous embodiments, i.e., the node identifier of the related static node may be obtained based on a request from the node identification means or may be read from the memory of the temporary node, if the related static node was determined beforehand.

In an operation 906 the node identifier of the related static node is transmitted to the requesting network node, where it is received in an operation 907.

Thereafter, the requesting network node forwards the information on shared data to the related static node for storage thereat.

Accordingly, all information for files associated with hash identifiers in the responsibility range of hash identifiers of the temporary node will physically be stored at the related static node. Consequently, any subsequently generated lookup request pertaining to the keyword of Fig. 9 and transmitted to the temporary node will be suitably forwarded to the related static node storing the information profile.

While in Fig. 9 a single keyword was used in example, in a practical case a shared file may be associated with a number of keywords, in which case the information profile will be distributed to all static nodes determined on the basis of each one of the keywords using the scheme of Fig. 9.

In accordance with the inventive scheme, all information profiles associated with a certain keyword will be collected at a given static node in a context space determined on the basis of the above outlined hashing scheme, and a lookup request regarding a certain keyword will only be forwarded to the corresponding static node which then can present the collection of information profiles containing the keyword to the requesting party. 12. Each context space includes a plurality of information profiles associated with a keyword, each information profile being associated with a shared file. A network node may hold a number of context spaces pertaining to a number of keywords.

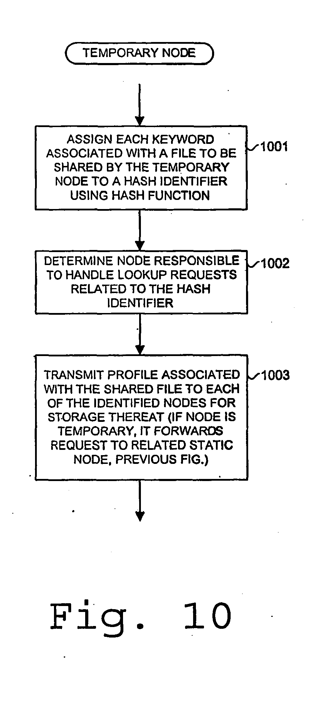

In the following a further embodiment of the invention will be outlined with regard to Fig. 10.

Fig. 10 illustrates operations for information management in a peer-to-peer network having temporary nodes and static nodes, particularly outlining operations for sharing a file at a temporary node with other users. In Fig. 10 it is assumed that a user of a temporary node having joined the peer-to-peer network wishes to share an own file with other users. For preparing a sharing of the file an information profile is generated, e.g. in the form as shown in Fig. 6. For example, the information profile can be generated under assistance of profile generation means, facilitating the selection of keywords, description of the shared file, network address and similar.

In a first operation 1001 each keyword associated with the file to be shared by the temporary node is assigned to a hash identifier using the hash function, as outlined with regard to previous embodiments.

In an operation 1002 a node responsible to handle lookup requests related to each of the determined hash identifiers is obtained, e.g. using the Chord protocol and the node identifiers of the temporary nodes and static nodes.

Then, in an operation 1003 the profile associated with the shared file is transmitted to each of the identified nodes for storage thereat. If the determined node turns out to be a temporary node, the temporary forwards the request to the related static node, as outlined with regard to previous embodiments.

In an alternative, the temporary node, in an operation 1002, may determine a static node responsible to handle lookup requests related to each of the hash identifiers obtained in operation 1001, in which case the information profile in operation 1003 will not be transmitted to temporary nodes for forwarding, but already be directly transmitted to responsible static nodes.

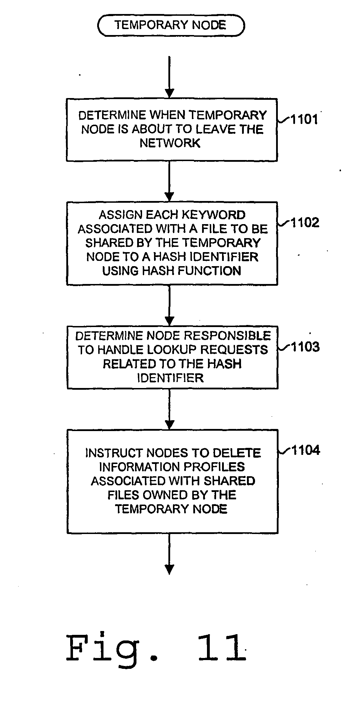

In the following a further embodiment of the invention will be described with regard to Fig. 11.

Fig. 11 illustrates operations for information management in a peer-to-peer network having temporary network nodes and static network nodes, particularly outlining operations when a temporary node leaves the peer-to-peer network.

In a first operation 1101 it is determined that the temporary node is about to leave the network, e.g. by detecting a user instruction to close an information sharing session in the peer-to-peer network, or by detecting an instruction to close a network connection maintained between the temporary network node and the peer-to-peer network.

Thereafter, in an operation 1102 each keyword associated with shared files by the temporary node is assigned to a hash identifier using the hash function, or corresponding previously determined information is accessed at the temporary node, and in an operation 1103 the respective nodes responsible to handle the lookup request related to the identified hash identifiers are obtained, e.g. as outlined with regard to previous embodiments.

Thereafter, in an operation 1104 each of the determined nodes is instructed to delete information profiles associated with shared files owned by the temporary node.

If an instructed node is a temporary node, this node will forward the instruction to its related static node, for instructing the related static node to delete the information profiles associated with the shared files.

Alternatively, information profiles stored at the static nodes are provided with a time stamp, enabling a deletion of the information on the shared filed by the static node after lapse of a predetermined time. To avoid a deletion of the information profiles, each node owning a file related to the information profile can instruct the static node to reset the time stamp to the current time to avoid the deletion of the information on the shared file. Thus, if such an instruction to maintain the information profile is not received within a certain period of time, it is likely that the associated node has left the network, and the corresponding information profile pertaining to files shared by the leaving note can be deleted.

The above outlined features and functionalities may be realized in hardware and/or software. For example, a program may be provided having instructions adapted to make a data processing device execute one or more of the above features or operations. Further, a computer readable medium may be provided, in which a program is embodied, wherein the program is to make a data processing device one or more of the above features or operations. A computer program product may comprise the computer readable medium.

## Claims

1. Method for information management of a network having temporary nodes and static nodes, with the static nodes (210, 211, 212) storing information on shared data including a storage location of a shared data file and the temporary nodes (300, 301, 302; 500) constituting visiting nodes of the network and performing a forwarding functionality of look-up requests pertaining to shared data associated with hash identifiers assigned to the temporary node to a related static node, so that a join or leave of a temporary node does not create traffic in the network associated with a re-distribution or re-mapping of the information on shared data, comprising:
receiving at a temporary node (300, 301, 302; 500) a lookup request for information on shared data related to a keyword, the keyword being associated with the temporary node (300, 301, 302; 500) based on the hash function and node identifiers of both the temporary nodes and the static nodes;
obtaining at the temporary node (300, 301, 302; 500) a node identifier of a related static node (210, 211, 212) by mapping the node identifier of the temporary node (300, 301, 302; 500) onto the static nodes (210, 211, 212) based on the hash function and the node identifiers of the static nodes; and
forwarding the request from the temporary node (300, 301, 302; 500) to the related static node (210, 211, 212) using the obtained node identifier.

2. Method of claim 1, wherein keywords and the node identifiers of the temporary nodes and the static nodes (210, 211, 212) are mapped onto a ring of sequential hash identifiers by hashing the keywords and node identifiers using the hash function;
wherein each temporary or static node (210, 211, 212) is responsible to handle lookup requests related to keywords assigned to hash identifiers that precede or coincide with the hash identifier of the temporary or static node; and
wherein each static node (210, 211, 212) is responsible to hold information on shared data associated with keywords assigned to hash identifiers that precede or coincide with the hash identifier of the static node.

3. Method of claim 2, wherein the temporary node, upon joining the network, obtains the node identifier of the related static node (210, 211, 212) by effecting hashing its own node identifier to determine the node identifier of the static node (210, 211, 212) responsible for this hash identifier.

4. Method of at least one of claims 1 to 3, wherein determining the node identifier of the related static node (210, 211, 212) includes:
hashing the node identifier of the temporary node (300, 301, 302; 500) to obtain a hash identifier associated with the temporary node;
determining a node responsible for the hash identifier of the temporary node; and
transmitting a request to the determined node, instructing the node to return its node identifier, if the node is a static node, or to return the node identifier of a related static node (210, 211, 212) of the determined node, if the node is a temporary node.

5. Method of claim 4, wherein the first one of the static nodes (210, 211, 212) associated with a hash identifier succeeding the hash identifier associated with the temporary node (300, 301, 302; 500) constitutes the related static node.

6. Method of claims 4 or 5, wherein the temporary node (300, 301, 302; 500) obtains a list of related static nodes (210, 211, 212) associated with hash identifiers succeeding the hash identifier associated with the temporary node.

7. Method of at least one of claims 1 to 6, wherein the temporary node (300, 301, 302; 500) transmits a request to obtain the node identifier of the related static node (210, 211, 212) to one of the nodes of the network.

8. Method of at least one of claims 1 to 7, including
receiving at the temporary node (300, 301, 302; 500) a storage request to store information on shared data associated with the keyword from a requesting node; and
returning the identifier of the related static node (210, 211, 212) to the requesting node for instructing the requesting node to forward the information on shared data to the obtained static node (210, 211, 212) for storage thereat.

9. Method of at least one of claims 1 to 8, including hashing each of at least one keyword associated with a file to be shared by the temporary node (300, 301, 302; 500) to determine an associated hash identifier;
determining a node responsible to handle lookup requests related to the hash identifier; and
transmitting a profile associated with the shared file to each of the identified nodes for storage thereat, if the identified nodes are static nodes, or for forwarding the profile to the respectively related static node, if the identified nodes are temporary nodes.

10. Method of at least one of claims 1 to 9, including
determining when the temporary node (300, 301, 302; 500) is about to leave the network; and
instructing deletion of information profiles associated with shared files owned by the temporary node (300, 301, 302; 500) from the static nodes.

11. Method of at least one of claims 1 to 10, wherein
the information on a shared file owned by the temporary node (300, 301, 302; 500) and stored at a static node (210, 211, 212) selected based on the hash function includes a time stamp, enabling deletion of the information on a shared file by the static node (210, 211, 212) after lapse of a predetermined time, and
wherein the temporary node (300, 301, 302; 500) sharing the file in time intervals instructs the static node (210, 211, 212) to reset the time stamp to the current time to avoid deletion of the information on the shared file.

12. Method of at least one of claims 1 to 11, wherein the information on shared data constitutes a context space including a plurality of information profiles associated with the keyword, each information profile being associated with a shared file.

13. Method of at least one of claims 1 to 12, wherein the mapping of keywords and node identifiers is performed using the Chord protocol.

14. A program having instructions, which, when executed on a data processing device, make the data processing device to execute the method of any one of claims 1 to 13.

15. A computer readable medium, in which a program according to claim 14 is embodied .

16. A computer program product comprising the computer readable medium of claim 15.

17. Temporary node (300, 301, 302; 500) for information management of a network having temporary nodes and static nodes, the static nodes (210, 211, 212) storing information on shared data including a storage location of a shared data file and the temporary node (300, 301, 302; 500) constituting a visiting node of the network and performing a forwarding functionality of look-up requests pertaining to shared data associated with hash identifiers assigned to the temporary node to a related static node, so that a join or leave of the temporary node does not create traffic in the network associated with a re-distribution or re-mapping of the information on shared data, comprising:
means (501) for receiving a lookup request for information on shared data related to a keyword, the keyword associated with the temporary node (300, 301, 302; 500) based on the hash function and node identifiers of both the temporary nodes and the static nodes;
means (502) for obtaining a node identifier of a related static node (210, 211, 212) by mapping the node identifier of the temporary node (300, 301, 302; 500) onto the static nodes (210, 211, 212) based on the hash function and node identifiers of the static nodes; and
means (503) for forwarding the request to the related static node (210, 211, 212) using the obtained node identifier.

## Patentansprüche

1. Verfahren zum Informations-Management eines Netzwerks mit temporären Knoten und statischen Knoten, wobei die statischen Knoten (210, 211, 212) Informationen zu Gemeinschaftsdaten speichern, einschließlich einem Speicherort einer Gemeinschaftsdatendatei, und wobei die temporären Knoten (300, 301 302; 500) Besuchsknoten des Netzwerks bilden und eine Weiterleitfunktionalität von Nachschlageanfragen durchführen, welche sich auf Gemeinschaftsdaten beziehen, die mit dem temporären Knoten zu einem zugehörigen statischen Knoten zugewiesenen Hash-Identifizierer assoziiert sind, so dass ein Beitreten oder Verlassen eines temporären Knotens keinen Verkehr im Netzwerk erzeugt, der mit der Wiederverteilung oder Umkartierung der Information zu Gemeinschaftsdaten assoziiert ist, umfassend:
Empfangen, an einem temporären Knoten (300, 301, 302; 500) einer Nachschlageanforderung nach Informationen zu Gemeinschaftsdaten, die sich auf ein Schlüsselwort beziehen, wobei das Schlüsselwort mit den temporären Knoten (300, 301, 302; 500) assoziiert ist, basierend auf der Hash-Funktion und Knoten-Identifizierern sowohl der temporären Knoten als auch der statischen Knoten;
Erhalten, an dem temporären Knoten (300, 301, 302; 500) eines Knoten-Identifizierers eines zusammengehörigen statischen Knotens (210, 211, 212) durch Abbilden des Knoten-Identifizierers des temporären Knotens (300, 301, 302; 500) auf die statischen Knoten (210, 211, 212), basierend auf der Hash-Funktion und den Knoten-Identifizierern der statischen Knoten; und
Weiterleiten der Anfrage aus dem temporären Knoten (300, 301, 302; 500) an den zugehörigen statischen Knoten (210, 211, 212) unter Verwendung des erhaltenen Knoten-Identifizierers.

2. Verfahren nach Anspruch 1, wobei Schlüsselworte und die Knoten-Identifizierer der temporären Knoten und der statischen Knoten (210, 211, 212) auf einen Ring sequentieller Hash-Identifizierer abgebildet werden, durch Streuen (hashing) der Schlüsselwörter und Knoten-Identifizierer unter Verwendung der Hash-Funktion;
wobei jeder temporäre oder statische Knoten (210, 211, 212) verantwortlich ist, Nachschlaganfragen zu handhaben, welche sich auf mit Hash-Identifizierern zugewiesene Schlüsselworte beziehen, welche dem Hash-Identifizierer des temporären oder statischen Knotens vorausgehen oder damit koinzidieren; und
wobei jeder statische Knoten (210, 211, 212) dafür verantwortlich ist, Informationen zu Gemeinschaftsdaten zu halten, welche mit Schlüsselwörtern assoziiert sind, die Hash-Identifizierern zugewiesen sind, welche dem Hash-Identifizierer der statischen Knotens vorausgehen oder damit übereinstimmen.

3. Verfahren nach Anspruch 2, wobei der temporäre Knoten beim Beitreten zum Netzwerk den Knoten-Identifizierer des zugehörigen statischen Knotens (210, 211, 212) erhält, indem er ein Streuen seines eigenen Knoten-Identifizierers bewirkt, um den Knoten-Identifizierer des statischen Knotens (210, 211, 212), der für diesen Hash-Identifizierer verantwortlich ist, zu bestimmen.

4. Verfahren zumindest eines der Ansprüche 1 bis 3, wobei das Bestimmen des Knoten-Identifizierers des zugehörigen statischen Knotens (210, 211, 212) beinhaltet:
Streuen des Knoten-Identifizierers des temporären Knotens (300, 301, 302; 500), um einen mit dem temporären Knoten assoziierten Hash-Identifizierer zu erhalten;
Bestimmen eines für den Hash-Identifizierer des temporären Knotens verantwortlichen Knotens; und
Senden einer Anfrage an den bestimmten Knoten, Instruieren des Knotens, seinen Knoten-Identifizierer zurückzugeben, falls der Knoten ein statischer Knoten ist, oder den Knoten-Identifizierer eines zugehörigen statischen Knotens (210, 211, 212) des bestimmten Knotens zurückzugeben, falls der Knoten ein temporärer Knoten ist.

5. Verfahren nach Anspruch 4, wobei der erste der statischen Knoten (210, 211, 212), der mit dem Hash-Identifizierer assoziiert ist, der dem mit dem temporären Knoten (300, 301, 302; 500) assoziierten Hash-Identifizierer folgt, den zugehörigen statischen Knoten bildet.

6. Verfahren nach Ansprüchen 4 oder 5, wobei der temporäre Knoten (300, 301, 302; 500) eine Liste zugehöriger statischer Knoten (210, 211, 212) erhält, die mit Hash-Identifizierern assoziiert sind, welche dem mit dem temporären Knoten assoziierten Hash-Identifizierer folgen.

7. Verfahren zumindest eines der Ansprüche 1 bis 6, wobei der temporäre Knoten (300, 301, 302; 500) eine Anfrage zum Erhalten des Knoten-Identifizierers des zugehörigen statischen Knotens (210, 211, 212) an einen der Knoten des Netzwerks sendet.

8. Verfahren zumindest eines der Ansprüche 1 bis 7, beinhaltend:
Empfangen, am temporären Knoten (300, 301, 302; 500), einer Speicheranfrage zum Speichern von Informationen zu mit dem Schlüsselwort assoziierten Gemeinschaftsdaten aus einem anfragenden Knoten; und
Rückgeben des Identifizierers des zugehörigen statischen Knotens (210, 211, 212) an den anfragenden Knoten zum Instruieren des anfragenden Knotens, die Informationen zu Gemeinschaftsdaten an die ermittelten statischen Knoten (210, 211, 212) zur Speicherung daselbst weiterzuleiten.

9. Verfahren nach zumindest einem der Ansprüche 1 bis 8, beinhaltend das Streuen jedes der zumindest einen Schlüsselwörter, die mit einer Datei assoziiert sind, welche mit den temporären Knoten (300, 301, 302; 500) zu teilen ist, um einen assoziierten Hash-Identifizierer zu bestimmen;
Bestimmen eines Knotens, der für das Handhaben von Nachschlaganfragen verantwortlich ist, die sich auf den Hash-Identifizierer beziehen; und
Senden eines mit der Gemeinschaftsdatei assoziierten Profils an jeden der identifizierten Knoten zur Speicherung daselbst, falls die identifizierten Knoten statische Knoten sind, oder zum Weiterleiten des Profils an die jeweiligen zugehörigen statischen Knoten, falls die identifizierten Knoten temporäre Knoten sind.

10. Verfahren nach zumindest einem der Ansprüche 1 bis 9, beinhaltend
Bestimmen, wenn der temporäre Knoten (300, 301, 302; 500) gerade am Verlassen des Netzwerks ist; und
Instruieren des Löschens von mit den durch den temporären Knoten (300, 301, 302; 500) besessenen Gemeinschaftsdateien assoziierten Informationsprofilen aus den statischen Knoten.

11. Verfahren nach zumindest einem der Ansprüche 1 bis 10, wobei
die Information zu einer Gemeinschaftsdatei, die den temporären Knoten (300, 301, 302; 500) gehört und in einem statischen Knoten (210, 211, 212) gespeichert ist, der basierend auf der Hash-Funktion ausgewählt ist, einen Zeitstempel beinhaltet, der ein Löschen der Information zu einer Gemeinschaftsdatei durch den statischen Knoten (210, 211, 212) nach Verstreichen eines vorbestimmten Zeitraums ermöglicht, und
wobei der temporäre Knoten (300, 301, 302; 500), der die Datei in Zeitintervallen teilt, den statischen Knoten (210, 211, 212) instruiert, den Zeitstempel auf die aktuelle Zeit zurückzusetzen, um ein Löschen der Information in der Gemeinschaftsdatei zu vermeiden.

12. Verfahren nach zumindest einem der Ansprüche 1 bis 11, wobei die Informationen zu Gemeinschaftsdaten einen Kontextraum bilden, der eine Mehrzahl von Informationsprofilen beinhaltet, die mit dem Schlüsselwort assoziiert sind, wobei jedes Informationsprofil mit einer Gemeinschaftsdatei assoziiert ist.

13. Verfahren nach zumindest einem der Ansprüche 1 bis 12, wobei das Abbilden von Schlüsselwörtern und Knoten-Identifizierern unter Verwendung des "Chord"-Protokolls durchgeführt wird.

14. Instruktionen aufweisendes Programm, das bei Ausführung auf einer Datenverarbeitungsvorrichtung die Datenverarbeitungsvorrichtung dazu bringt, das Verfahren eines der Ansprüche 1 bis 13 auszuführen.

15. Computerlesbares Medium, bei dem ein Programm gemäß Anspruch 14 ausgeführt ist.

16. Computerprogrammprodukt, umfassend das computerlesbare Medium von Anspruch 15.

17. Temporärer Knoten (300, 301 302; 500) zum Informations-Management eines Netzwerks mit temporären Knoten und statischen Knoten, wobei die statischen Knoten (210, 211, 212) Informationen zu Gemeinschaftsdaten speichern, einschließlich einem Speicherort einer Gemeinschaftsdatendatei, und wobei die temporären Knoten (300, 301 302; 500) einen Besuchsknoten des Netzwerks bilden und eine Weiterleitfunktionalität von Nachschlageanfragen durchführen, welche sich auf Gemeinschaftsdaten beziehen, die mit dem temporären Knoten zu einem zugehörigen statischen Knoten zugewiesenen Hash-Identifizierer assoziiert sind, so dass ein Beitreten oder Verlassen eines temporären Knotens keinen Verkehr im Netzwerk erzeugt, der mit der Wiederverteilung oder Umkartierung der Information zu Gemeinschaftsdaten assoziiert ist, umfassend:
Mittel (501) zu Empfangen einer Nachschlaganfrage nach Informationen zu sich auf ein Schlüsselwort beziehenden Gemeinschaftsdaten, wobei das Schlüsselwort mit dem temporären Knoten (300, 301, 302; 500) assoziiert ist, basierend auf der Hash-Funktion und Knoten-Identifizierern sowohl der temporären Knoten als auch der statischen Knoten;
Mittel (502) zum Erhalten eines Knoten-Identifizierers eines zugehörigen statischen Knotens (210, 211, 212) durch Abbilden des Knoten-Identifizierers des temporären Knotens (300, 301, 302; 500) auf die statischen Knoten (210, 211, 212), basierend auf der Hash-Funktion und Knoten-Identifizierern der statischen Knoten; und
Mittel (503) zum Weiterleiten der Anfrage an den zugehörigen statischen Knoten (210, 211, 212) unter Verwendung des erhaltenen Knoten-Identifizierers.

## Revendications

1. Procédé de gestion d'informations d'un réseau ayant des noeuds temporaires et des noeuds statiques, les noeuds statiques (210, 211, 212) stockant des informations concernant des données partagées incluant un emplacement de stockage d'un fichier de données partagé et les noeuds temporaires (300, 301, 302 ; 500) constituant des noeuds d'invité du réseau et exécutant une fonctionnalité de faire suivre à un noeud statique lié des demandes de consultation se rapportant à des données partagées associées à des identificateurs de hachage attribués au noeud temporaire à un noeud lié, de sorte que le fait de rejoindre ou de quitter un noeud temporaire ne crée pas de trafic dans le réseau associé à une redistribution ou à une remise en correspondance des informations concernant des données partagées, comprenant :
la réception au niveau d'un noeud temporaire (300, 301, 302 ; 500) d'une demande de consultation d'informations concernant des données partagées liées à un mot-clé, le mot-clé étant associé au noeud temporaire (300, 301, 302 ; 500) sur base de la fonction de hachage et d'identificateurs de noeud tant des naeuds temporaires que des noeuds statiques ;
l'obtention au niveau du noeud temporaire (300, 301, 302 ; 500) d'un identificateur de noeud d'un noeud statique lié (210, 211, 212) en mettant en correspondance l'identificateur de noeud du noeud temporaire (300, 301, 302 ; 500) sur les noeuds statiques (210, 211, 212) sur base de la fonction de hachage et des identificateurs de noeud des noeuds statiques ; et
faire suivre au noeud statique lié (210, 211, 212) la demande provenant du noeud temporaire (300, 301, 302 ; 500) en utilisant l'identificateur de noeud obtenu.

2. Procédé selon la revendication 1, dans lequel des mots-clés et les identificateurs de noeud des noeuds temporaires et des noeuds statiques (210, 211, 212) sont mis en correspondance sur une boucle d'identificateurs de hachage séquentiels par le hachage des mots-clés et des identificateurs de noeud en utilisant la fonction de hachage ;
dans lequel chaque noeud temporaire ou statique (210, 211, 212) est responsable de manipuler des demandes de consultation liées à des mots-clés attribués à des identificateurs de hachage qui précèdent ou coïncident avec l'identificateur de hachage du noeud temporaire ou statique ; et
dans lequel chaque noeud statique (210, 211, 212) est responsable de détenir des informations concernant des données partagées associées à des mots-clés attribués à des identificateurs de hachage qui précèdent ou coïncident avec l'identificateur de hachage du noeud statique.

3. Procédé selon la revendication 2, dans lequel le noeud temporaire, en rejoignant le réseau, obtient l'identificateur de noeud du noeud statique lié (210, 211, 212) en effectuant le hachage de son propre identificateur de noeud pour déterminer l'identificateur de noeud du noeud statique (210, 211, 212) responsable de cet identificateur de hachage.

4. Procédé selon au moins une des revendications 1 à 3, dans lequel la détermination de l'identificateur de noeud du noeud statique lié (210, 211, 212) inclut :
le hachage de l'identificateur de noeud du noeud temporaire (300, 301, 302 ; 500) pour obtenir un identificateur de hachage associé au noeud temporaire ;
la détermination d'un noeud responsable de l'identificateur de hachage du noeud temporaire ; et
la transmission d'une demande au noeud déterminé, ordonnant au noeud de renvoyer son identificateur de noeud, si le noeud est un noeud statique, ou de renvoyer l'identificateur de noeud d'un noeud statique lié (210, 211, 212) du naeud déterminé, si le naeud est un naeud temporaire.

5. Procédé selon la revendication 4, dans lequel le premier des noeuds statiques (210, 211, 212) associé à un identificateur de hachage succédant à l'identificateur de hachage associé au noeud temporaire (300, 301, 302 ; 500) constitue le noeud statique lié.

6. Procédé selon les revendications 4 ou 5, dans lequel le noeud temporaire (300, 301, 302 ; 500) obtient une liste de noeuds statiques liés (210, 211, 212) associés à des identificateurs de hachage succédant à l'identificateur de hachage associé au noeud temporaire.

7. Procédé selon au moins une des revendications 1 à 6, dans lequel le noeud temporaire (300, 301, 302 ; 500) transmet à un des noeuds du réseau une demande pour obtenir l'identificateur de noeud du noeud statique lié (210, 211, 212).

8. Procédé selon au moins une des revendications 1 à 7, incluant
la réception au niveau du noeud temporaire (300, 301, 302 ; 500) d'une demande de stockage pour stocker des informations sur des données partagées associées au mot-clé provenant d'un noeud demandeur ; et
le renvoi de l'identificateur du noeud statique lié (210, 211, 212) au noeud demandeur pour ordonner au noeud demandeur de faire suivre les informations concernant des données partagées vers le noeud statique obtenu (210, 211, 212) pour stockage au niveau de celui-ci.

9. Procédé selon au moins une des revendications 1 à 8, incluant
le hachage de chaque au moins un mot-clé associé à un fichier à partager par le noeud temporaire (300, 301, 302 ; 500) pour déterminer un identificateur de hachage associé ;
la détermination d'un noeud responsable de manipuler des demandes de consultation liées à l'identificateur de hachage ; et
la transmission d'un profil associé au fichier partagé à chacun des noeuds identifiés pour stockage au niveau de ceux-ci, si les noeuds identifiés sont des noeuds statiques, ou pour faire suivre le profil vers le noeud statique respectivement lié, si les noeuds identifiés sont des noeuds temporaires.

10. Procédé selon au moins une de revendications 1 à 9, incluant
la détermination quand le noeud temporaire (300, 301, 302 ; 500) est sur le point de quitter le réseau ; et
l'ordre d'effacer des profils d'informations associés à des fichiers partagés appartenant au noeud temporaire (300, 301, 302 ; 500) à partir des noeuds statiques.

11. Procédé selon au moins une des revendications 1 à 10, dans lequel
les informations concernant un fichier partagé appartenant au noeud temporaire (300, 301, 302 ; 500) et stockées au niveau d'un noeud statique (210, 211, 212) sélectionné sur base de la fonction de hachage incluent un horodatage, permettant un effacement des informations concernant un fichier partagé par le noeud statique (210, 211, 212) après écoulement d'un temps prédéterminé, et
dans lequel le noeud temporaire (300, 301, 302 ; 500) partageant le fichier dans des intervalles de temps ordonne au noeud statique (210, 211, 212) de remettre l'horodatage au temps courant pour éviter un effacement des informations concernant le fichier partagé.

12. Procédé selon au moins une des revendications 1 à 11, dans lequel les informations concernant des données partagées constituent un espace de contexte incluant une pluralité de profils d'informations associés au mot-clé, chaque profil d'informations étant associé à un fichier partagé.

13. Procédé selon au moins une des revendications 1 à 12, dans lequel la mise en correspondance de mots-clés et d'identificateurs de noeud est effectuée en utilisant le protocole Chord.

14. Programme ayant des instructions, qui, lorsqu'elles sont exécutées sur un dispositif de traitement de données, font que le dispositif de traitement de données exécute le procédé selon l'une quelconque des revendications 1 à 13.

15. Support lisible par ordinateur, dans lequel un programme selon la revendication 14 est incorporé.

16. Produit formant programme informatique comprenant le support lisible par ordinateur selon la revendication 15.

17. Noeud temporaire (300, 301, 302 ; 500) pour la gestion d'informations d'un réseau ayant des noeuds temporaires et des noeuds statiques, les noeuds statiques (210, 211, 212) stockant des informations concernant des données partagées incluant un emplacement de stockage d'un fichier de données partagées et le noeud temporaire (300, 301, 302 ; 500) constituant un noeud d'invité du réseau et exécutant une fonctionnalité de faire suivre à un noeud statique lié des demandes de consultation se rapportant à des données partagées associées à des identificateurs de hachage attribués au noeud temporaire, de sorte que le fait de rejoindre ou de quitter le noeud temporaire ne crée pas de trafic dans le réseau associé à une redistribution ou à une remise en correspondance des informations sur des données partagées, comprenant :
un moyen (501) pour recevoir une demande de consultation d'informations concernant des données partagées liées à un mot-clé, le mot-clé étant associé au noeud temporaire (300, 301, 302 ; 500) sur base de la fonction de hachage et des identificateurs de noeud tant des noeuds temporaires que des noeuds statiques ;
un moyen (502) pour obtenir un identificateur de noeud d'un noeud statique lié (210, 211, 212) en mettant en correspondance l'identificateur de noeud du noeud temporaire (300, 301, 302 ; 500) avec les noeuds statiques (210, 211, 212) sur base de la fonction de hachage et les identificateurs de noeud des noeuds statiques ; et
un moyen (503) pour faire suivre la demande au noeud statique lié (210, 211, 212) en utilisant l'identificateur de noeud obtenu.
